# EUROPEAN PATENT SPECIFICATION

(11) **EP 3 390 284 B1**
(45) Date of publication and mention of the grant of the patent: **23.06.2021**
(21) Application number: 16812951.8
(22) Date of filing: 16.12.2016
(51) Int. Cl.: C02F 1/461, C02F 101/12, C02F 103/34

(54) **METHOD AND PLANT FOR REMOVING CHLORIDE FROM FERTILIZER WASTEWATER**
VERFAHREN UND VORRICHTUNG ZUR BESEITIGUNG VON CHLOR AUS DÜNGERABWASSER
PROCÉDÉ ET SYSTÈME D'ÉLIMINATION DU CHLORURE PRÉSENT DANS DES EAUX RÉSIDUAIRES D'ENGRAIS

(30) Priority: 18.12.2015 NO 20151751
(43) Date of publication of application: 24.10.2018
(73) Proprietor: Yara International ASA, 0213 Oslo (NO)
(72) Inventor: LOUWE, Robertus, 3933 Porsgrunn (NO); LACOMBE, Marie, 0266 Oslo (NO); CHLADEK, Petr, 3944 Porsgrunn (NO); LORENTSEN, Odd-Arne, 3916 Porsgrunn (NO); KONGSTEIN, Ole Edvard, 7091 Tiller (NO); SOLHEIM, Asbjørn, 7624 Ekne (NO)
(74) Representative: De Clercq & Partners
(86) International application number: PCT/EP2016/081336
(87) International publication number: WO 2017/103041

(56) References cited:
- JP-A- S51 130 070
- US-A- 6 132 627
- AKYOL ABDURRAHMAN ET AL: "A comparative study of electrocoagulation and electro-Fenton for treatment of wastewater from liquid organic fertilizer plant", SEPARATION AND PURIFICATION TECHNOLOGY, ELSEVIER SCIENCE, AMSTERDAM, NL, vol. 112, 3 April 2013 (2013-04-03), pages 11-19, XP028563934, ISSN: 1383-5866, DOI: 10.1016/J.SEPPUR.2013.03.036

## Description

### Technical Field

This invention relates to a novel system and method for removing chloride from fertilizer industrial wastewater and more particularly nitrophosphate fertilizer wastewater or wastewater from other mineral or organo-mineral fertilizer processes.

### Background of the Invention

Industrial wastewater is one of the important pollution sources of the water environment. During the last century, a huge amount of industrial wastewater was discharged into rivers, lakes and coastal areas. This resulted in serious pollution problems in the water environment and caused negative effects to the eco-system.

There are many types of industrial wastewater based on different industries and contaminants; each sector produces its own particular combination of pollutants. Like the various characteristics of industrial wastewater, the treatment of industrial wastewater must be designed specifically for the particular type of effluent produced.

In many industrial systems, the goal is to reduce the amount of wastewater being discharged into the environment by recirculating the wastewater effluent back into the industrial system itself.

Within the fertilizer industry, the nature of the wastewater may vary depending on the type of fertilizer being produced and the specific processes involved.

Mineral fertilisers contain one or more primary (major) nutrients nitrogen (N), phosphorus (P) or potassium (K) in inorganic form or as urea or cyanamide. The primary nutrients N, P and K are required by plants in large or moderate amounts. Depending on the formulation, mineral fertilisers also contain other nutrients required by plants to a minor degree, such as Ca, Mg, and S. Trace elements required in small quantities are B, Cl, Cu, Fe, Mn, Mo, Zn. Fertilizers are classified in terms of their major nutrient contents: straight fertilisers generally contain only one major or primary nutrient (N, P or K) whereas complex fertilizers contain two or more major nutrients (NP, PK or NPK and more particularly NP or NPK fertilizers).

There are two common processes for producing complex fertilizers, namely the mixed acid process and the nitrophosphate process. In the nitrophosphate process specifically, rock phosphate is initially dissolved in excess nitric acid and Ca(NO₃)₂^{∗}4H₂O is removed from the digested raw phosphate solution by cooling and filtration. Then, by neutralizing the resulting filtrate, a solution containing mainly ammonium nitrate and ammonium-calcium phosphates is formed. By evaporation of the solution, an AN-MAP-DCP (ammonium nitrate - monoammonium phospohate - dicalcium phospohate) slurry-melt is formed, to which may be added potassium chloride/potassium sulphate salts. By using these starting components and the described process a large range of fertilizer formulas may be provided.

The main effluent components in NP or NPK wastewater are ammonia, nitrate, fluoride and phosphate, and the wastewater may also contain heavy metals from the phosphate rock, such as Cd, Hg and Zn.

The Austrian Federal Environment Agency issued a report in 2002 entitled *State of the Art for the Production of Fertilisers with Regard to the IPPC-Directive,* Monographien Band 105, M-105 (see: http://www.umweltbundesamt.at/fileadmin/site/publikationen/M105.pdf and accessed 5 October 2015; see also Best Available Techniques for Pollution Prevention and Control in the European Fertilizer Industry, *Booklet No. 7 of 8: Production of NPK Fertilizers by the Nitrophosphate Route,* European Fertilizer Manufacturers' Association, 2000). In the Austrian Report, there is a discussion on specific methods for reducing wastewater emissions and they included the following 7 recommendations as state-of-the-art for the nitrophosphate process specifically:
1. Avoidance of antifoaming agents for the phosphate rock digestions;
2. Recycling of scrubbing liquor arising from treatment of the phosphate rock digestion off-gases into the production process;
3. Recycling of washing water for sand washing into the production process;
4. Avoidance of direct cooling/quenching, e.g. co-condensation of exhaust vapours;
5. Recycling of scrubbing liquor from waste gas scrubbing of the ammoniation into the production process;
6. Combined waste gas scrubbing of the neutralization/evaporation and granulation/drying units; and
7. Application of buffer reservoirs in order to compensate fluctuations of

### volume and load of the wastewater.

There are a multitude of recommendations to address different types of contamination. However, chloride removal is not one of them. Effectively, chloride is not typically considered as an important contaminant in fertilizer wastewater. This may be due to the relative low levels of chloride seen in fertilizer wastewater which may only be on the order of 1000 ppm. For comparison, drinking water has maximum levels of 250 ppm, whereas salt water contains 35,000 ppm and brine has in excess of 50,000 ppm. As such, the levels seen in fertilizer wastewater are not generally considered to be an environmental concern.

### Summary of the Invention

In a first aspect of the present invention, a method of removing chloride from wastewater from a fertilizer plant is provided, wherein wastewater from a fertilizer plant is directed towards an electrochemical cell, wherein chloride is converted to chlorine gas by electrolysis, and wherein the mass transfer within the electrochemical cell is increased and the chlorine gas is removed, increasing the mass transfer within the electrochemical cell, wherein the mass transfer is increased by mechanical stirring of the electrolyte, vibrating the electrodes, rotating the electrodes, ultrasonicating the electrode or electrolyte, or inert mesh turbulence promoters, or electrolyte jetting. More particularly, the fertilizer plant is a nitrophosphate fertilizer plant, meaning that the plant uses the nitrophosphate process to make fertilizers such as complex fertilizers. Alternatively, the wastewater may be from other mineral fertilizer or organo-mineral fertilizer processes. More particularly, the fertilizer plant may produce compositions comprising ammonium nitrate. More particularly, the fertilizer plant may produce compositions comprising ammonium nitrate by a melt granulation step. As used herein, a fertilizer plant is any factory producing compositions that can be used as fertilizers, such as, without limitation ammonium nitrate. As known in the art, ammonium nitrate can be used as an explosive in addition to its use as a fertilizer. Accordingly, any plant manufacturing ammonium nitrate is considered to be a fertilizer plant regardless of the ultimate use of the ammonium nitrate.

Reducing the chloride concentration allows the treated wastewater to be safely recirculated back to the fertilizer plant. In some embodiments, the chloride concentration may be reduced to levels lower than 500 ppm, more particularly 350 ppm or even more particularly lower than 250 ppm.

In a more specific embodiment, the mass transfer is increased by electrolyte jetting.

In another embodiment, a fertilizer plant is provided wherein the fertilizer plant is fluidly connected to an electrochemical cell having an anode and a cathode wherein the electrochemical cell further comprises mass transfer increasing means for removing chlorine gas from the solution, wherein the mass transfer increasing means are selected from the group consisting of means for mechanical stirring of the electrolyte, vibrating the electrodes, rotating the electrodes, ultrasonicating the electrode or electrolyte, or inert mesh turbulence promoters, or electrolyte jetting, and wherein the electrochemical cell is fluidly connected to the fertilizer plant so as to recirculate wastewater back to the fertilizer plant.. More particularly, the fertilizer plant is a nitrophosphate, other mineral or organo-mineral fertilizer plant. The electrochemical cell may comprise electrolyte jets. When the electrolyte jets are located in the anode, the jets may improve the efficiency of the electrolysis by increasing mass transfer. When the jets are additionally located at the cathode, the jets may also be used to avoid high local pH and scaling of the cathode.

### Brief Description of the Drawings

Embodiments of the invention are further described hereinafter with reference to the accompanying drawings, in which:
Figure 1A is a side view of an electrochemical cell; Figure 1B is a cross-sectional view of one embodiment along axis A of Figure 1A; and Figure 1C is a cross-sectional view of an alternate embodiment along axis A of Figure 1A.
Figure 2A is a front view of the electrochemical cell of Figures 1A and B; Figure 2B is a cross-sectional view along axis B of Figure 2A; and Figure 2C is a cross-sectional view along axis C of Figure 2A.
Figure 3 is a plot of chloride concentration over time during electrolysis of a sample of wastewater from a nitrophosphate fertilizer plant.
Figure 4 is a plot of chloride concentration over time during electrolysis at three different current densities and with the use of electrolyte jetting.
Figure 5 is a plot of chloride concentration over time after the electrolysis had been completed in a system with a lid (square) and in a system without a lid (triangle).

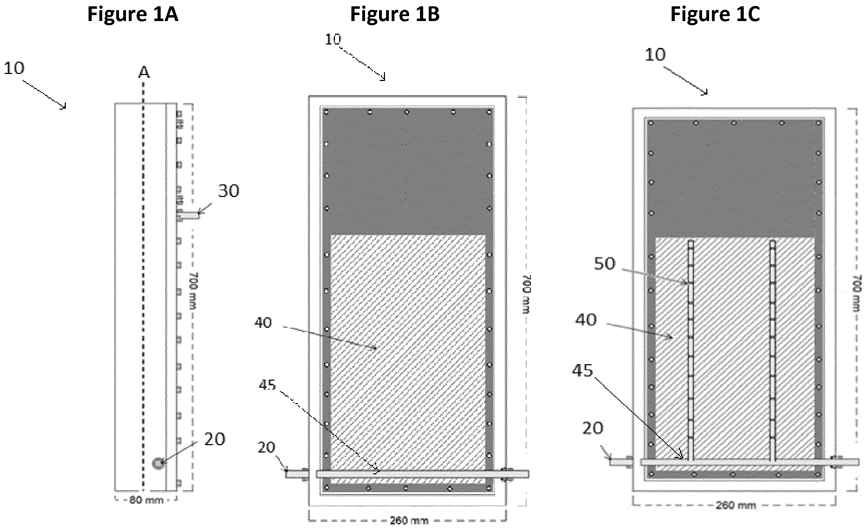

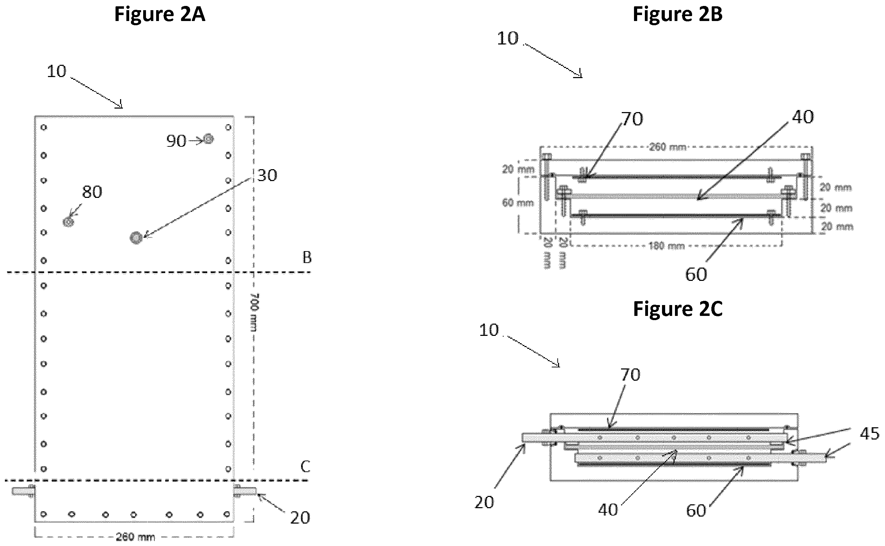

The dimensions illustrated in Figures 1 and 2 merely reflect the dimensions of the particular electrochemical cell used in Example 2 and are for illustrative purposes only and do not otherwise limit the generality of the invention.

### Detailed Description of the Invention

Chloride can be seen in fertilizer wastewater, particularly wastewater from the nitrophosphate, other mineral or organo-mineral process. Without being bound by theory, the chloride may have originated from the phosphate rock, depending on the source of phosphate rock. This impurity may be present in only modest concentrations on the order of 1000 ppm. If the wastewater is merely released into the environment, this level of chloride present may not present any environmental or regulatory concern. However, if the wastewater is then recirculated back into the fertilizer plant, then chloride when present even in modest amounts can destabilize ammonium nitrate which can become explosive and present a significant safety concern. More particularly, in the process of producing, for example NPK granules, water is evaporated and in doing so, the local concentration of any chloride present can increase substantially. Since ammonium nitrate would also be present, the combination can then become explosive. If wastewater comprising chloride is recirculated back to a plant producing compositions comprising ammonium nitrate, any increase of chloride concentration could pose a detonation risk. The thermal stability of ammonium nitrate is decreased by even minor presence of chloride salts like iron chloride, calcium chloride and ammonium chloride. In particular, this would be a major concern when producing granules comprising ammonium nitrate by melt granulation involving evaporation of water.

Chloride has been identified in other industrial processes as a pollutant that can be removed though typically relatively high concentrations are seen before it is characterized as such. In these circumstances, chloride has been recognized as adding to the solids content and increasing the corrosive character of water. Alternatively, chloride is removed when the end result is drinking water which requires very low levels of chloride to be present, typically less than 250 ppm. Means of treatment are typically demineralization, reverse osmosis, electrodialysis, and evaporation (see Chapter 1 "Water Sources, Impurities and Chemistry", Handbook of Industrial Water Treatment, GE Power & Water,www.gewater.com/handbook/index.jsp, accessed 5 October 2015).

Demineralized water is water that has had almost all of its mineral ions removed, such as cations like sodium, calcium, iron, and copper, and anions such as chloride, fluoride, nitrate, carbonate and sulphate. Demineralization is a chemical process that uses specially manufactured ion-exchange resins, which exchange hydrogen and hydroxide ions for dissolved minerals, and then recombine to form water. Because most non-particulate water impurities are dissolved salts, demineralization produces a high purity water that is generally similar to distilled water, and this process is quick and without scale buildup.

Reverse osmosis involves forcing water through an osmotic membrane that rejects salts and allows water flux under pressures in excess of osmotic pressure. Reverse osmosis is currently the most widely practiced seawater desalination process and produces a permeate desalinated water that lacks ionic constituents and can be too pure for release into the environment. In evaporation, or thermal desalination, water is evaporated and condensed, sometimes in multiple stages, in order to recycle the latent heat of condensation.

Electrochemically, electrodialysis is commonly practiced for desalination. In electrodialysis systems, salt ions are transferred across ion exchange membranes in a stack under the action of a galvanic potential. The galvanic potential is supplied as a voltage generated at an anode and cathode. Unlike reverse osmosis, the salt concentration of output product water from electrodialysis can be adjusted by adjusting the current applied to the stack. Salt ions are transferred from diluent or product chamber to concentrated saltwater in the concentrate chamber under a direct current electric field applied at the electrodes. A practical concentration factor of five to ten is common; that is, transferring ions from a diluent saltwater with a concentration of 2000 ppm to a concentrate saltwater with a concentration of between 10,000 ppm and 20,000 ppm. Recent patent applications describing eletrodialysis for desalinating contaminated saltwater include US patent application number US2015/0096891 and PCT patent application number WO2014/197966.

While the above techniques are the most commonly used processes for desalination, a search of the patent literature reveals two other electrochemical techniques: electrolysis and capacitive deionization.

Electrolysis is an old technology dating to the 19^{th} century and still used in the chlor-alkali industry where sodium chloride is electrolyzed to produce the chemicals chlorine and sodium hydroxide (caustic soda). However, the process starts with brine, i.e. very high concentrations of sodium chloride on the order of 50,000 ppm. Such high concentrations allow efficient electrolysis. In UK patent application GB2499025, a process is described wherein aggressive decontaminating agents, such as HCl or NaCl, are used in the decommissioning of nuclear facilities. The UK patent application then reports using electrolysis to remove chlorides from the radioactive wastewater. There is no discussion on why chloride is mentioned as a pollutant or any dangers associated therewith. However, a final chloride concentration of merely 5 ppm is also reported and this is not a credible result from simple electrolysis. As mentioned above, the chlor-alkali industry requires chloride concentrations of 50,000 ppm in order for the electrolysis to be efficient. In comparison, regulations for drinking water only require levels less than 250 ppm and there is no suggestion in any of the prior art of using electrolysis to remove chloride in drinking water. Further, no additional techniques are mentioned in GB2499035 as necessary to bring the chloride level down to such a low level.

In comparison, Chinese patent application CN102001776 describes a relatively new process using capacitive deionization (electrosorb technology) in order to reduce the salt concentration seen in various industries, namely the petroleum, chemical, and pharmaceutical industries. Capacitive deionization is an emerging technique promising to be an alternative to reverse osmosis and is based on ion electrosorption (see M.E. Suss et al, Energy Environ Sci, 2015, 8, 2296).

The document JPS51130070 describes a method for treating waste water containing ammonia, fluorine, phosphoric acid, silica and calcium, which is discharged from a fertilizer manufacturing plant, by means of an electrolytic treatment.

It has been found that electrolysis can be used to remove chloride from wastewater from fertilizer plants. In particular, it has been found that electrolysis can actually be used at modest starting levels of chloride concentration of around 1000 ppm, much less than that seen in the chlor-alkali industry where chloride concentrations of 50,000 ppm are necessary for the efficient hydrolysis of chloride. Further, electrolysis can be used to bring the chloride concentration to levels lower than 500 ppm and more particularly lower than 350 ppm, and even more particularly lower than 250 ppm. As mentioned above, this can have particular advantages in relation to the nitrophosphate, other mineral or organo-mineral fertilizer processes, and even more particularly when the wastewater is recirculated back to the fertilizer plant.

Electrolysis is a well-known technique and the following discussion on the reactions at the electrodes, as well as the nature of potential electrodes and electrolytes are not meant to limit the generality of the technique to the skilled person.

Treatment of the effluent from the nitrophosphate, other mineral or organo-mineral fertilizer plant in the electrochemical cell facilitates the removal of chloride which is then liberated as chlorine gas. The chlorine gas may then be treated in an off-gas scrubber prior to release of any remaining harmless gases to the atmosphere.

Suitable off-gas systems which may be used to scrub the liberated chlorine may, for example, use NaOH as the scrubbing agent. This would then produce NaCl and NaClO, which may be re-used as a decontamination agent. In alternative embodiments of the invention, solid state scrubbers can be employed.

Typically, the cathode reaction involves the release of hydrogen gas, while oxygen and chlorine are evolved at the anode. It is generally beneficial to separate the anode and cathode reactions through the use of a separator or membrane (porous or ion selective). This may have multiple beneficial results including:
1. Preventing parasitic redox couples (e.g. Fe²⁺/Fe³⁺ and NO₃⁻/NO₂⁻) from reducing the current efficiency;
2. Keeping metal ions away from the cathode in order to minimise the risk of electro-deposition; and
3. Separating gas streams (i.e. chlorine/oxygen evolving from the anode and hydrogen at the cathode) for safety reasons and for eventual after treatment since the mixing of gas streams can be explosive.
While a typical cell separates the anolyte and catholyte compartments by a microporous separator or membrane, an undivided cell may also be used for the purpose of the present invention. This alternative approach provides the benefit of a simpler cell design with only one fluid circuit and, of course, removes the requirement for a separator. However, it does not possess the beneficial results discussed above.

The anolyte is the effluent from the fertilizer process, more particularly from the nitrophosphate, other mineral or organo-mineral process, referred to above as the fertilizer wastewater. The catholyte may also be the effluent from the wastewater or a concentrated salt solution, an acid solution such as nitric acid, water or another appropriate solution chosen by a skilled person. In more particular embodiments, the catholyte is the wastewater from the fertilizer plant.

The anode material of the cell should show stability in the electrolyte. In addition, the material should be suitable for both oxygen and chlorine evolution and demonstrate low wear rates for both reactions, as well as low overpotentials for chlorine evolution. It is also desirable that the anode material should show higher overpotentials for other reactions, such as oxygen evolution. Typical materials for use as anode materials include boron-doped diamond, coated titanium (coated with oxides of metals, e.g. iridium oxide, mixed iridium/ruthenium oxide and tin oxide) and bulk platinum. In general, electrodes known from the chlor-alkali industry can be used such as a DSA™ electrode from Permascand.

The selection of materials for the cathode materials is not as critical, with the main requirement being for stability in the electrolyte. In this context, stainless steel is particularly suitable, but this in no way limits the number of available materials, and a wide range of other materials which would be readily apparent to a person skilled in the art may also be employed for this purpose.

Typical separators/membranes are polymeric in nature and may comprise any of a number of commercially available alternatives which would be apparent to a skilled person. Common examples include, for example, an asbestos diaphragm, a Nafion® (sulphonated tetrafluoroethylene based fluoropolymer copolymer) cationic selective membrane or a microporous polyethylene separator. In particular, separators used in the chlor-alkali industry may be beneficially used. The membranes used in the chlor-alkali industry are commonly made of perfluorinated polymers. The membranes may have from one up to three layers, but generally consist of two layers. One of these layers consists of perfluorinated polymer with substituted carboxylic groups and is adjacent to the cathodic side. The other layer consists of perfluorinated polymer with substituted sulphonic groups and is adjacent to the anodic side. To give the membrane mechanical strength, the membrane is generally reinforced with PTFE fibres. Without limiting the generality of the foregoing, a suitable separator may be a PMX® membrane from De Nora.

At the anode, the reaction can be broken down into several discrete steps:
1. transport of the chloride by diffusion, migration or convection from the bulk solution to the surface of the electrode (mass transport);
2. desolvation of the solvated chloride
3. oxidation of the chloride ion on the anode surface (charge transfer)
4. evolution of the chlorine gas.

In the electrolysis of chloride from industrial effluent from the fertilizer industry, and more particularly where the nitrophosphate, other mineral or organo-mineral process is used, the first step, namely the mass transport is the limiting step. This is due to the relatively dilute chloride concentrations that are present which are typically on the order of only 1000 ppm.

In electrochemistry, one of the main ways to increase the mass transfer of various processes is the relative movement of the electrode-electrolyte. Besides allowing the use of higher current densities and thereby increasing the production rate and improving the flow regime, it can also help in the removal of chlorine gas.

There are many different methods of increasing the mass transfer known in the art, for example by mechanical stirring of the electrolyte, vibrating the electrodes, rotating the electrodes, ultrasonification of the electrode/electrolyte, and the incorporation of inert mesh turbulence promoters.

It has also been found that mass transfer may also be increased through the use of jets used to force the convection along the anode. The jet stream may be from a nozzle, such as a tube, or a hole or the like, directed at an angle, often perpendicularly to the surface of the anode. The mass transfer coefficient will be very high at the centre of the jet (also known as the stagnation point) and it decreases with increasing distance from the stagnation point. An overview of the literature in this field is in Zuckerman and Lior, "Jet impingment heat transfer: physics, correlations, and numerical modelling", Advances in Heat Transfer, 39, 565-631 (2006). The use of such jets may be referred to as "electrolyte jetting".

The jets may comprise standard pumps that direct anolyte through feed pipes with holes of the appropriate diameter. The orientation of the holes can then be adjusted to direct the flow of anolyte towards the anode. In some embodiments, the jets may be located at the base of the electrochemical cell though a person skilled in the art would be able to optimize, through routine experimentation, the placement of the jets, the number of jets, the size of the holes, and the velocity of the resulting anolyte flow depending on the dimensions and orientation of the particular electrochemical cell.

Jets can be easily adapted for many different electrochemical cells, both at the laboratory testing scale and in industrial use. It simply involves adjusting the stream velocity, orientation, and number of jets to be practicable for a large number of different sizes and orientations of electrochemical cells. This can be done without any inventive skill and involves merely routine optimization. This is in contrast to many of the other techniques where it may be necessary to use only specific sizes or orientations of the underlying electrochemical cell in order to efficiently increase the mass transfer. For example, ultrasound is mentioned often in the literature where the ultrasound causes the implosion of bubbles leading to shock waves and turbulence. However, this requires a relatively high power source that is located close to the electrodes making it practical for only relatively small cells only.

Electrolyte jetting may also be used at the cathode to avoid high local pH and scaling of the cathode.

Using electrolyte jets allows a much more efficient electrolysis and permits the chloride concentration to be reduced to below 500 ppm, more particularly below 350 ppm, below 300 ppm or below 250 ppm. The components of the cell, including the electrolytes and fluid circuits are adapted to handle the gas evolution, such that the evolved gases may be disengaged from the fluid streams and then suitably post-treated. Nevertheless, chlorine gas in particular is soluble in aqueous solutions. This can lead to the gas remaining in solution and potentially participating in back-reactions to regenerate chloride ion.

Without being bound by theory, the dissolved chlorine ions in wastewater can react to form hypochlorous acid (HOCI) according to:

Cl₂ + H₂O → HOCI + H⁺ + Cl⁻ (1)

Ammonium ion would also be expected in wastewater, particularly when the wastewater is NPK fertilizer wastewater. The hypochlorous acid may then react with the ammonium ion as follows:

2NH₄⁺ + 3HOCl → N₂ + 3H₂O + 5H⁺ + 3Cl⁻ (2)

or according to:

0.25NH₄⁺ + HOCl → 0.25NO₃⁻ + 0.25H₂O + 1.5H⁺ + Cl⁻ (3)

Following these mechanisms, over time, dissolved chlorine may then react to regenerate chloride within the wastewater. The use of jets as discussed above aids in not only increasing the mass transfer but also in releasing the chlorine gas from solution and reducing the likelihood of the above back-reactions occurring. Nevertheless, some dissolved chlorine is expected to remain in solution.

A desirable level of chloride may be less than 500 ppm and more particularly less than 350 ppm. Using the electrolyte jets allows the chloride concentration to be reduced to less than 250 ppm, or less than 200 ppm or even less than 150ppm and at this level, even if there is some back-reaction from dissolved chlorine to chloride ions, the resulting level of chloride ion present in solution would still be below the desired level of 500 ppm or 350 ppm.

For safety reasons when recirculating wastewater back to a nitrophosphate fertilizer plant, lower ultimate levels of chloride or chlorine that is obtained would be better. Nevertheless, for most practicable purposes a level of lower than 500, more particularly lower than 350 ppm would normally be considered acceptable.

Without being limited to specific embodiments, Figures 1 and 2 illustrate typical electrochemical cells. Figure 1A is a side view of an electrochemical cell 10 with an electrolyte inlet 20 and an electrolyte outlet 30. Figure 1B is a cross-sectional view along axis A of Figure 1A with electrolyte jets 45 and separator 40. Electrolyte jets 45 may, for example, be holes in a metal tube extending from electrolyte inlet 20.

A pump (not shown) may then be used to force the electrolyte through the holes in the electrolyte jets 45 with a particular velocity and orientation. The exact number of holes, the orientation, size and resulting velocity of the electrolyte jet stream can be easily optimized without any inventive skill and will depend on the size and dimensions of the particular electrolyte cell 10. Electrolyte may then recirculate from the electrolyte inlet 20, across the electrolyte cell 10 and exit through electrolyte outlet 30 to the pump and then back through electrolyte inlet 20. This recirculation may continue for the duration of the electrolysis. When jets are also used in conjunction with the cathode, then a second pump used to recirculate the catholyte separately would be beneficial to avoid any mixing of the gases evolving from the anode and cathode.

Alternatively, the electrolysis could be done continuously. However, when the electrolysis is done on a batch sample of wastewater, the duration of the electrolysis may be less than 24 hours, less than 5 hours, more particularly less than 4 hours, more particularly less than 3 hours, or less than 2 hours. In some embodiments the electrolysis is from as little as 5 minutes, for example from 5 minutes to 24 hours, from 5 minutes to 5 hours, 5 minutes to 4 hours, 5 minutes to 3 hours, 5 minutes to 2 hours, 5 minutes to 1 hour, 30 minutes to 5 hours, 30 minutes to 4 hours, 30 minutes to 3 hours, 30 minutes to 2 hours, 1-8 hours, 1-5 hours, 1-4 hours, 1-3 hours, or 1-2 hours. Without being bound by theory, the time required relates to the electrode area and the volume fraction.

By way of illustration, Figure 1C is an alternate embodiment where additional metal tubes 50 extend perpendicularly from electrolyte jets 40 whereby additional holes in tubes 50 may be orientated to further increase mass transfer within the electrochemical cell 10.

By way of comparison, in embodiment 1B whereby a fluid velocity of approximately 2.2 m s⁻¹ was created with a normal flow rate of 50 l h⁻¹ with four holes of a diameter of 2 mm in each electrolyte jet 45. In embodiment 1C, there were two extra tubes 50 with a total of 22 holes in each for a total of 44 jet streams. The pairs of holes were evenly distributed along the tubes 50 and the angle between the jets in each pair was approximately 90°. In this alternate embodiment, the total flow rate was approximately 100 l h⁻¹ corresponding to a fluid stream from the electrolyte jets of approximately 0.2 m s⁻¹.

In general, higher flow rates will result in improved mass transfer within the electrochemical cell. However, if the flow rate is too high, then it can lead to violent turbulent flow. There is also a balance between the energy needs involved in creating the flow rates compared to the efficiency gains from having improved mass transfer. This involves routine optimization which will vary depending on the particular dimensions and orientation of the electrochemical cell.

Figure 2A is a front view of the embodiment in Figure 1B and shows electrochemical cell 10 with electrolyte inlet 20, electrolyte outlet 30, gas inlet 80 and gas outlet 90. Figure 2B is a cross-sectional view of Figure 2A across axis B and shows anode 60, separator 40 and cathode 70. Figure 2C is a cross-sectional view of Figure 2A across axis C and additionally shows electrolyte jets 45.

The dimensions illustrated in Figures 1 and 2 are for illustrative purposes only and simply represent the dimensions of the electrolyte cells used in Example 2.

### Examples

### Example 1

An electrochemical cell was constructed with two non-polar anodes connected in parallel and three non-polar cathodes also connected in parallel. The anodes were made of 2.5 mm thick plates of DSA (Permascand, Sweden). The three cathodes were made of 3 mm stainless steel (316L). The electrolyte was an aqueous solution comprising 3.6 wt% dissolved NH₄NO₃ and 1000 ppm Cl⁻ in the form of dissolved NH₄Cl. The pH was adjusted to 1.4 by addition of aqueous HNO₃. The electrolyte was circulated by means of a pump. A separator was employed to avoid contact between the evolved gases, O₂, Cl₂ and H₂. The separator was made of PTFE and treated with Membratex (Svenska Textilfilter) and it was 1.3 mm thick with a density of 750 kgm⁻³. The hydrogen that evolved from the cathode was collected in a box placed at the top of the cathode, and the gas was dissipated into a ventilation hood about 2 m above the cell. The anode gases, O₂ and Cl₂ were dissipated directly into the ventilation chamber. A chloride sensitive electrode (Radiometer Copenhagen) was used in the electrolyte to continuously measure chloride concentration. Operating conditions were held at ambient temperature with a pH of 1-1.4 at the anode and below 3.5 at the cathode.

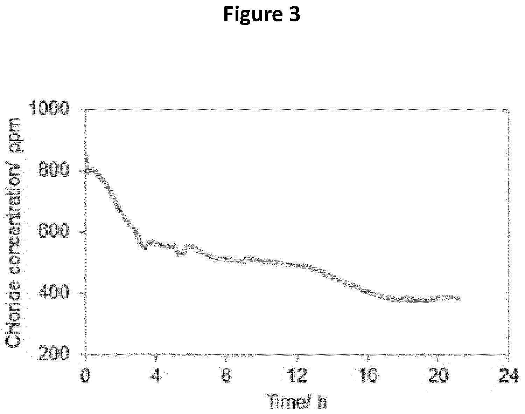

From Figure 3 it can be seen that the chloride removal was fastest in the beginning, but decreased with run time. An increase in current efficiency was also observed with decreasing current density. This indicated poor mass transfer of chloride ions towards the anode.

### Example 2

An electrochemical cell was equipped with an anode which was a dimensional stable anode from Permascand, and the cathode was SS 316 stainless steel. The membrane separator was a PMX® membrane from De Nora. The pH of both the anode and cathode electrolytes were monitored continuously with pH electrodes. A chloride sensitive electrode was used on the anode side to continuously measure chloride concentration.

The electrolyte used was wastewater from Yara International in Porsgrunn and was representative of industrial wastewater from the nitrophosphate process to make a complex fertilizer. The anodic current density was 62 A m⁻². The electrochemical cell was further equipped with two pumps, one for the anolyte and another for the catholyte. The pumps were used with a feed pipe at the base of the electrochemical cell to create jets of electrolyte that were directed towards the respective electrodes. A schematic of the electrochemical cell is illustrated in Figures 1A and 1B.

The construction material of the cell was PVC. The main compartment was machined out of a 60 mm thick PVC block. The screws are made of 316 except for the screws fixing the anode that is made of PVC . The O-rings are made of Viton.

The anolyte and the catholyte was fed through the electrolyte inlets 20 shown at the bottom of the cell 10, and further into electrolyte jets 45 equipped with jets (see figure 1B). The jets were simply holes in a metal tube with a diameter of 2 mm (four holes in each inlet tube). The electrolyte was further flowed through the electrolyte outlet 30 and into a small reservoir with Cl⁻ selective electrode and pH electrode (not shown). The electrolyte was then going to a pump (not shown) and pumped back into the electrolyte cell 10. The normal flow rate was about 50 l h⁻¹, equivalent to a fluid speed out of the jets of approximately 2.2 m s⁻¹.

The separator 40 was placed on a 20 mm wide terrace machined out in the PVC and fixed with a 5 mm thick PVC frame. This frame separates the gasses from the anode and the cathode. Both the electrodes are screwed to the inner wall of the cell, and a current collector goes through the cell wall equipped with an O-ring seal.

The additional jets directed towards the cathodes were used to avoid high local pH and reduce any cathode scaling.

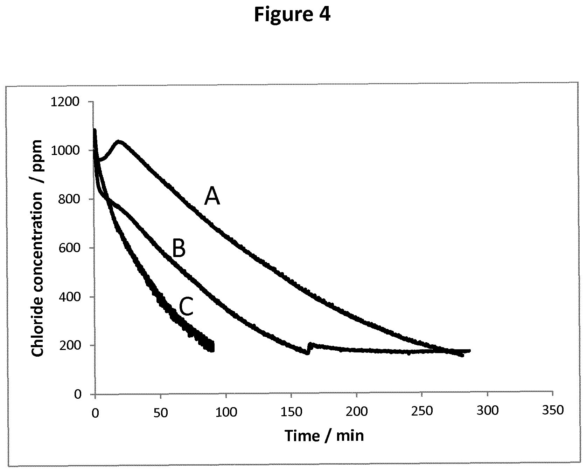

Figure 4 illustrates three typical experiments where the chloride concentration was measured at different currents. Run A was at 5 A; run B was at 10 A; and run C was at 20 A. A current of 10 A is equivalent to 120 Am⁻².

Figure 4 shows a significant improvement for chloride removal compared to the cell presented in Example 1. The figure also shows that the rate of chloride removal increased with increasing current and that this rate decreased with chloride concentration. Calculations showed that the Faradaic current efficiency was about 9 % for chloride removal for all the experiments presented in Figure 4.

### Example 3

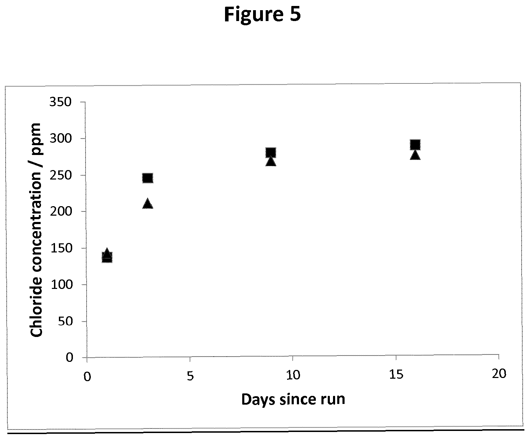

Anolyte from run B from Example 2 was then allowed to rest over a period of several days in order to observe the evolution of the chloride concentration over this time, both with the electrolyte being covered with a lid (square) and without a lid being present (triangle) as presented in Figure 5. The presence of a lid did not make a significant difference and in both cases, the chloride concentration increased before levelling off at about 275 ppm.

This indicates that chlorine gas remained dissolved within the electrolyte and, following mechanisms discussed above, reacted over several days to reform chloride ion. Nevertheless, since the electrolysis itself was sufficiently efficient, the chloride concentration remained at all times below 350 ppm.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. Method of removing chloride from wastewater from a fertilizer plant comprising:
a. Directing the chloride containing wastewater from the fertilizer plant to an electrochemical cell;
b. converting chloride to chlorine gas by electrolysis; and
c. Removing the chlorine gas formed in step b and increasing the mass transfer within the electrochemical cell, wherein the mass transfer is increased by mechanical stirring of the electrolyte, vibrating the electrodes, rotating the electrodes, ultrasonicating the electrode or electrolyte, or inert mesh turbulence promoters, or electrolyte jetting.

2. The method of claim 1 wherein the fertilizer plant is a nitrophosphate, or other mineral or organo-mineral fertilizer plant.

3. The method of claim 1 or claim 2 wherein the fertilizer plant produces compositions comprising ammonium nitrate.

4. The method of any one of claims 1-3 wherein the method further comprises recirculating the treated wastewater back to the fertilizer plant.

5. The method of any one of claims 1-4 wherein the mass transport is increased by electrolyte jetting.

6. The method of any one of claims 1-5 wherein the chloride concentration is reduced to less than 500 ppm.

7. The method of any one of claims 1-6 wherein the chloride concentration is reduced to less than 350 ppm.

8. The method of any one of claims 1-7 wherein the chloride concentrations reduced to less than 250 ppm.

9. The method of any one of claims 1-8 wherein the removing chloride step is for between 5 minutes and 24 hours.

10. The method of any one of claims 1-9 wherein the removing chloride step is for between 1 and 8 hours.

11. A fertilizer plant wherein chloride containing wastewater generated by the plant is fluidly connected to an electrochemical cell having an anode and a cathode, wherein the electrochemical cell further comprises mass transfer increasing means for removing chlorine gas from the solution, wherein said mass transfer increasing means are selected from the group consisting of means for mechanical stirring of the electrolyte, vibrating the electrodes, rotating the electrodes, ultrasonicating the electrode or electrolyte, or inert mesh turbulence promoters, or electrolyte jetting, and wherein the electrochemical cell is fluidly connected to the fertilizer plant so as to recirculate wastewater back to the fertilizer plant.

12. The fertilizer plant of claim 11 wherein the fertilizer plant is a nitrophosphate, other mineral or organo-mineral fertilizer plant.

13. The fertilizer plant of claim 11 or 12 wherein the fertilizer plant produces compositions comprising ammonium nitrate.

14. The fertilizer plant of any one of claims 11-13 wherein the electrochemical cell comprises electrolyte jets for directing electrolyte towards the anode.

15. The fertilizer plant of any one of claims 11-14 wherein the electrochemical cell comprises electrolyte jets for directing electrolyte towards the cathode.

## Patentansprüche

1. Verfahren zum Entfernen von Chlorid aus Abwasser von einer Düngeranlage, umfassend:
a. Leiten des chloridhaltigen Abwassers aus der Düngeranlage zu einer elektrochemischen Zelle;
b. Umwandeln von Chlorid in Chlorgas durch Elektrolyse; und
c. Entfernen des in Schritt b gebildeten Chlorgases und Erhöhen des Stoffübergangs innerhalb der elektrochemischen Zelle, wobei der Stoffübergang durch mechanisches Rühren des Elektrolyten, Vibrieren der Elektroden, Rotieren der Elektroden, Ultraschallbehandlung der Elektrode oder des Elektrolyten oder Turbulenzpromotoren aus inertem Maschenmaterial oder Elektrolytstrahlbehandlung erhöht wird.

2. Verfahren nach Anspruch 1, wobei die Düngeranlage eine Anlage für Nitrophosphatdünger oder sonstigen mineralischen oder organomineralischen Dünger ist.

3. Verfahren nach Anspruch 1 oder Anspruch 2, wobei die Düngeranlage Zusammensetzungen produziert, die Ammoniumnitrat umfassen.

4. Verfahren nach einem der Ansprüche 1 bis 3, wobei das Verfahren des Weiteren Rezirkulieren des behandelten Abwassers zurück in die Düngeranlage umfasst.

5. Verfahren nach einem der Ansprüche 1 bis 4, wobei der Stoffübergang durch Elektrolytstrahlbehandlung erhöht wird.

6. Verfahren nach einem der Ansprüche 1 bis 5, wobei die Chloridkonzentration auf weniger als 500 ppm reduziert wird.

7. Verfahren nach einem der Ansprüche 1 bis 6, wobei die Chloridkonzentration auf weniger als 350 ppm reduziert wird.

8. Verfahren nach einem der Ansprüche 1 bis 7, wobei die Chloridkonzentrationen auf weniger als 250 ppm reduziert werden.

9. Verfahren nach einem der Ansprüche 1 bis 8, wobei der Chloridentfernungsschritt zwischen 5 Minuten und 24 Stunden dauert.

10. Verfahren nach einem der Ansprüche 1 bis 9, wobei der Chloridentfernungsschritt zwischen 1 und 8 Stunden dauert.

11. Düngeranlage, wobei durch die Anlage erzeugtes chloridhaltiges Abwasser fließtechnisch mit einer elektrochemischen Zelle verbunden ist, die eine Anode und eine Kathode aufweist, wobei die elektrochemische Zelle des Weiteren Stoffübergangserhöhungsmittel umfasst, um Chlorgas aus der Lösung zu entfernen, wobei die Stoffübergangserhöhungsmittel ausgewählt sind aus der Gruppe bestehend aus Mitteln zum mechanischen Rühren des Elektrolyten, Vibrieren der Elektroden, Rotieren der Elektroden, Ultraschallbehandeln der Elektrode oder des Elektrolyten oder Turbulenzpromotoren aus inertem Maschenmaterial oder Elektrolytstrahlbehandlung, und wobei die elektrochemische Zelle fließtechnisch mit der Düngeranlage verbunden ist, um Abwasser zurück zu der Düngeranlage zu rezirkulieren.

12. Düngeranlage nach Anspruch 11, wobei die Düngeranlage eine Anlage für Nitrophosphatdünger oder sonstigen mineralischen oder organomineralischen Dünger ist.

13. Düngeranlage nach Anspruch 11 oder 12, wobei die Düngeranlage Zusammensetzungen produziert, die Ammoniumnitrat umfassen.

14. Düngeranlage nach einem der Ansprüche 11 bis 13, wobei die elektrochemische Zelle Elektrolytstrahle zum Lenken von Elektrolyt in Richtung der Anode umfasst.

15. Düngeranlage nach einem der Ansprüche 11 bis 14, wobei die elektrochemische Zelle Elektrolytstrahle zum Lenken von Elektrolyt in Richtung der Kathode umfasst.

## Revendications

1. Procédé d'élimination du chlorure dans des eaux résiduaires d'une usine d'engrais comprenant :
a. la direction des eaux résiduaires contenant du chlorure provenant de l'usine d'engrais vers une cellule électrochimique ;
b. la conversion de chlorure en chlore gazeux par électrolyse ; et
c. l'élimination du chlore gazeux formé à l'étape b et l'augmentation du transfert de masse dans la cellule électrochimique, le transfert de masse étant augmenté par l'agitation mécanique de l'électrolyte, la vibration des électrodes, la rotation des électrodes, l'ultrasonication de l'électrode ou de l'électrolyte, ou par des promoteurs de turbulence à maille inerte, ou jet d'électrolyte.

2. Procédé selon la revendication 1, l'usine d'engrais étant une usine de nitrophosphate ou d'autres engrais minéraux ou organo-minéraux.

3. Procédé selon la revendication 1 ou la revendication 2, l'usine d'engrais produisant des compositions comprenant du nitrate d'ammonium.

4. Procédé selon l'une quelconque des revendications 1 à 3, le procédé comprenant en outre la remise en circulation des eaux résiduaires traitées vers l'usine d'engrais.

5. Procédé selon l'une quelconque des revendications 1 à 4, le transport de masse étant augmenté par jet d'électrolyte.

6. Procédé selon l'une quelconque des revendications 1 à 5, la concentration en chlorure étant réduite à moins de 500 ppm.

7. Procédé selon l'une quelconque des revendications 1 à 6, la concentration en chlorure étant réduite à moins de 350 ppm.

8. Procédé selon l'une quelconque des revendications 1 à 7, la concentration en chlorure étant réduite à moins de 250 ppm.

9. Procédé selon l'une quelconque des revendications 1 à 8, l'étape d'élimination du chlorure durant entre 5 minutes et 24 heures.

10. Procédé selon l'une quelconque des revendications 1 à 9, l'étape d'élimination du chlorure durant entre 1 et 8 heures.

11. Usine d'engrais, des eaux résiduaires contenant du chlorure générées par l'usine étant reliées de manière fluide à une cellule électrochimique ayant une anode et une cathode, la cellule électrochimique comprenant en outre des moyens d'augmentation du transfert de masse pour éliminer le chlore gazeux de la solution, lesdits moyens d'augmentation du transfert de masse étant choisis dans le groupe constitué par des moyens d'agitation mécanique de l'électrolyte, vibration des électrodes, rotation des électrodes, ultrasonication de l'électrode ou de l'électrolyte, ou par des promoteurs de turbulence à maille inerte, ou jet d'électrolyte, et la cellule électrochimique étant reliée de manière fluide à l'usine d'engrais afin de remettre en circulation les eaux usées vers l'usine d'engrais.

12. Usine d'engrais selon la revendication 11, l'usine d'engrais étant une usine de nitrophosphate, d'autres engrais minéraux ou organo-minéraux.

13. Usine d'engrais selon la revendication 11 ou 12, l'usine d'engrais produisant des compositions comprenant du nitrate d'ammonium.

14. Usine de production d'engrais selon l'une quelconque des revendications 11 à 13, la cellule électrochimique comprenant des jets d'électrolyte pour diriger l'électrolyte vers l'anode.

15. Installation de production d'engrais selon l'une quelconque des revendications 11 à 14, la cellule électrochimique comprenant des jets d'électrolyte pour diriger l'électrolyte vers la cathode.
